# EUROPÄISCHE PATENTANMELDUNG

(11) **EP 0 081 171 A2**
(43) Veröffentlichungstag der Anmeldung: **15.06.1983**
(21) Anmeldenummer: 82110985.7
(22) Anmeldetag: 27.11.1982
(51) Int. Cl.: F02D 11/10

(54) **Vorrichtung zum Festlegen einer Einstelleinrichtung für Vergaser od. dgl.**

(30) Priorität: 01.12.1981 DE 3147459; 09.10.1982 DE 3237523
(71) Anmelder: E M G GmbH, D-4933 Blomberg-Donop (DE)
(72) Erfinder: Fafflok, Friedrich, D-4790 Paderborn-Schloss Neuhaus (DE); Lehmann, Oskar, D-4933 Blomberg Donop (DE)
(74) Vertreter: Hoefer, Theodor, Dipl.-Ing.

(57) **Zusammenfassung**

Bei einer Vorrichtung zum Festlegen einer Einstelleinrichtung mit einem mittels eines Gaspedales (43) betätigbaren Bowdenzug (34), Gestänge o.dgl., der mit einem Vergaser und/oder EInspritzeinrichtung von Brennkraftmaschinen wie Kraftfahrzeuge verbunden ist, ist die Einstelleinrichtung mit einer elektrisch (elektronisch) gesteuerten Drehvorrichtung als Festlegeeinrichtung ausgestattet, die mit einem Hebelarm (48) des Vergasers (der Einspritzeinrichtung) unter Zwischenschaltung des Bowdenzuges (34) verbunden ist. Dabei ist der Bowdenzug (34) unter Federwirkung mit einer Spannrolle (33) der Festlegeeinrichtung kraftschlüssig verbunden und hält die eingestellte Gas und/oder Luftmenge des Vergasers fest.

## Beschreibung

Die Erfindung bezieht sich auf eine Vorrichtung zum Festlegen einer Einstelleinrichtung mit Bowdenzug, Gestänge o.dgl. für Vergaser und/oder Einspritzeinrichtungen an Brennkraftmaschinen, insbesonere Kfz.-Motoren.

Es ist bekannt, bei derartigen Vorrichtungen eine Handgaseinrichtung zu verwenden, mit der auf mechanischem Wege das die Gasmenge regelnde Gestänge fixiert wird. Zuvor muß die gewünschte Kraftstoffmenge von Hand vorgewählt werden. Derartige Einrichtungen verfügen nicht über eine automatische Abstellung bei Betätigung der Fußbremse sowie nicht über eine Schnellabstellung durch Auslösung eines Kontaktes. Die umständliche und mitunter verkehrsgefährdende Bedienung hat dazu geführt, daß die konventionelle Handgaseinrichtung kaum noch zur Anwendung kommt.

Aufgabe der Erfindung ist es, eine automatische Vorrichtung zum stufenlosen Festlegen (Feststellen, Festhalten) des Gasgestänges bei Vergasern und/oder bei Einspritzeinrichtungen zu schaffen, mit der jede (z.B. mit dem Gaspedal) vorgewählte Kraftstoffgemischmenge konstant gehalten werden kann, ohne z.B. das Gaspedal nochmals betätigen zu müssen sowie auch Schaltvorgänge vorzunehmen,ohne die eingestellte Gaszufuhr o.dgl. während der Beschleunigung verändern zu müssen.

Erfindungsgemäß wird die Aufgabe bei einer Vorrichtung zum Festlegen einer Einstellvorrichtung mit einem mittels eines Gaspedals betätigten Bowdenzug, Gestänge, der mit einem Vergaser und/oder einer Einspritzeinrichtung an Brennkraftmaschinen, insbesondere Kraftfahrzeugmaschinen, verbindbar ist, dadurch gelöst, daß eine elektrisch (elektronisch) gesteuerte Dreheinrichtung als Festlegeinrichtung, die mit einer mit dem Stellhebel des Vergasers (der Einspritzeinrichtung) unter Zwischenschaltung eines weiteren Bowdenzuges kuppelbare, unter Federwirkung sich rückdrehende Spannrolle kraftschlüssig verbunden ist.

Eine derartige Festlegevorrichtung gestattet es, ein Gasgestänge o.agl. zum Vergaser und/oder einer Einspritzvorrichtung an Brennkraftmaschinen in gewissen variablen Stellungen restzulegen (festzuhalten), ohne Rücksicht auf eine Veränderung der die Gasmenge, Gaszusammensetzung o.dgl. sonst verändernden Einrichtung wie Gaspedal.

Dabei wird vorzugsweise die Einspritzeinrichtung, Drosselklappe eines Vergasers o.dgl. zunächst auf einen Mindestwert eingestellt, der zweckmäßig während der gesamten Fahrt nicht verändert wird. Dazu hat das Gasgestänge o.dgl. eine gewisse unveränderliche Lage. Soll z.B. zum Beschleunigen des Fahrzeuges eines Änderung (Erhöhung) der Werte für den Vergaser o.dgl. vorgenommen werden, kann das Gaspedal betätigt werden. Nach Beendigung dieser Betätigung bleibt die Mindestwerteinstellung beibehalten.

Es ist dadurch möglich, den Brennstoffverbrauch zu vermindern, da durch das Beibehalten des Mindestwertes ein öfteres Abstellen, größeres Verändern der Werte oder Anlassen vermieden wird.

Die mit der Erfindung erzielten Vorteile bestehen auch insbesondere darin, daß durch den Einbau der Anlage eine beruhigte und umsichtige Fahrweise gefördert wird, die gleichzeitig einen geringeren Materialverschleiß mit sich bringt. Darüber hinaus zeichnet sich die wartungsfreie Anlage durch leichte Montage und geringfügige Baugröße aus. Ein wesentlicher Vorteil besteht auch darin, daß z.B. durch den in Lenkradnähe angebrachten Impulskontakt die Anlage äußerst verkehrssicher zu bedienen ist. Auch sind bei eingeschalteter Anlage Schaltvorgänge möglich.

Ein wesentlicher Vorteil der Erfindung kann beispielsweisedarin liegen, bei geringerem Materialaufwand und einfacher Technik und bei unkompliziertem Einbau (Montage), unabhängig vom Fahrzeugtyp und den Platzverhältnissen im Motorraum, den Handgaszug zu ersetzen. Dabei kann die vorgegebene Gasmenge o.dgl. über einen Knopfdruck elektronisch, elektrostatisch o.dgl. festgestellt werden. Während der Beschleunigung kann die vorgegebene Gasmenge o.dgl. automatisch auf ein Optimum zurückgestellt werden.

Darüber hinaus kann die Vorrichtung im eingeschalteten Zustand die Aufgabe vorteilhaft lösen, während der Beschleunigung ein störungsfreies Schalten vom 1. bis zum 4.Gang oder mehr (und auch zurück) zu ermöglichen.

Weiterhin kann die Vorrichtung über einen Knopf zur Korrektur der Werte abgeschaltet werden. Ebenso kann die Vorrichtung beim Einleiten eines Bremsvorganges abgeschaltet werden.

Eine mit der Kupplung verbundene elektronische Gasrückstellung kann es erlauben, trotz festgestellter Drosselklappe Schaltvorgänge durchzuführen, d.h. auch bei einmal vorgewählter Kraftstoffmenge einen Beschleunigungsvorgang aus dem 1. bis in den letzten Gang vorzunehmen. Die während der Beschleunigung aus dem Stand vorgewählte Kraftstoffmenge ist in der Regel für ein energiesparendes Fahren im Teillastbereich (Stadtverkehr) zu groß. Dieses Problem kann mit der Erfindung dadurch gelöst werden, daß mit zunehmender Drehzahl über einen vakuumabhängigen Unterdruckversteller ein Zurückdrehen der Drosselklappe erfolgt.

Bei kurzfristigem Mehrbedarf an Kraftstoff, z.B. bei Uberholvorgängen oder an Steigungen kann mit dem Fahrpedal das Gas gegeben werden. Dabei kann z.B. ein Bowdenzug durch die Kraft einer Feder von der Spannrolle aufgespult werden. Nach Beendigung wird die Spannrolle von der am Gashebel angeordneten Rückholfeder wieder zurückgezogen, d.h. der wirksame Bowdenzug verlängert sich.

Es ist in der Praxis bisher so, daß bei jeder Betätigung des Gaspedals die Beschleunigerpumpe zusätzlich Kraftstoff in den Vergaser einspritzt. Auch nach jedem Schaltvorgang wird eine Mehrmenge an Kraftstoff zugeführt und damit die Beschleunigerpumpe in volle Tätigkeit gesetzt. Mit einer Vorrichtung gemäß der Erfindung wird die Einspritzmenge der Beschleunigerpumpe optimal genutzt, da die Festlegevorrichtung beim Schaltvorgang die festgestellte Gasmenge auf "Leerlauf", und nach dem Schaltvorgang in die vorher vorgegebene Stellung der Drosselklappen stellt.

Bei Einleitung eines Bremsvorganges oder Unterbrechnung stellt die Festlegevorrichtung beim Schließen des Bremslichtstromkreises das Gas auf "Leerlauf", nach dem Bremsvorgang stellt diese Festlegevorrichtung das Gas in die vorgegebene Stellung. Dauert der Bremsvorgang jedoch länger als 5 sec., wird der Strom für den Stellmotor abgeschaltet und eine Mitnehmerscheibe wird frei und die Spannrolle kann sich entgegengesetzt drehen.

Auf der Zeichnung sind Ausführungsbeispiele der Erfindung dargestellt. Es zeigen:

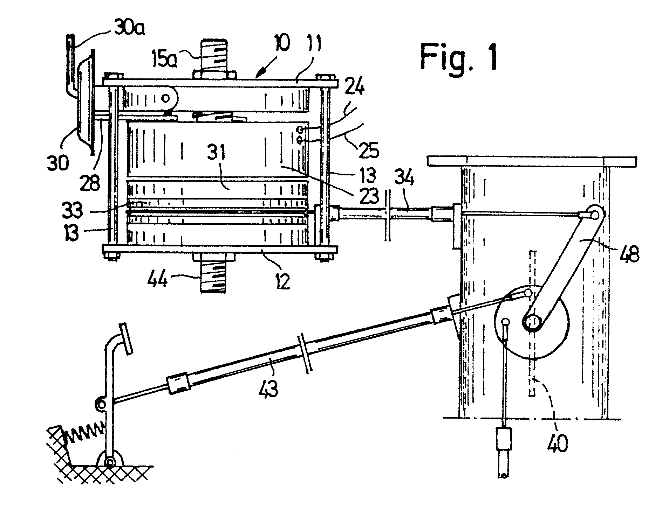

Fig.1 eine schematische Ansicht einer Festlegevorrichtung an einer Luftdrosselklappe eines Vergasers mit zwei Bowdenzügen;
Fig.2 eine Explosionsdarstellung einer Magnetscheibenfestlegevorrichtung;
Fig.3 eine Explosionsdarstellung der abgeänderten Festlegevorrichtung mit Stellmotor und Einzelteilen;
Fig.4 eine Seitenansicht der abgeänderten Festlegevorrichtung mit elektrischem Stellmotor teilweise geschnitten;
Fig.5 einen senkrechten Schnitt durch eine einteilig ausgebildete Lochscheibe als Kodierscheibe und Mitnehmerscheibe.

Mit 10 ist das Gehäuse einer Festlegevorrichtung als elektrische Drehvorrichtung mit Magnetscheiben bezeichnet, das eine obere Abdeckplatte 11 und eine untere Grundplatte 12 aufweist, die mittels vier Stehbolzen 13 eckseitig zusammengehalten sind.

Diese elektrische Drehvorrichtung als Festlegevorrichtung spannt mittels einer Spannrolle 33 einen Bowdenzug 34, der mit einem Hobelarm 48 verbunden ist, der eine Luft- Drosselklappe 40 des Vergasers bewegt.

Dieser Bowdenzug 34 läuft etwa parallel zu dem üblichen, mit einem Gaspedal gekuppelten Bowdenzug 43, der ebenfalls die Luft-Drosselklappe 40 bewegt. Einerseits kann diese Drosselklappe 40 durch das Gaspedal betätigt werden, andererseits hält der erregte Magnet die Spannrolle 33 und damit den zusätzlichen Bowdenzug 34, der zur Spannrolle 33 führt, in gewisser Stellung der Drosselklappe 40 fest. Bei einem stromlosen Magneten wird die Spannrolle 33 freigegeben und durch die Rückholfeder in die Ausgangsstellung gebracht, so daß auch die Drosselklappe 40 ihre Ausgangsstellung wieder einnimmt.

In der Abdeckplatte 11 ist mittig ein Aufhängebolzen 15a mit äußerem Gewinde 15b befestigt der einen Teil der zentralen Achse 15 bildet. An seinem inneren Zapfenkeil 16 ist ebenfalls ein Gewinde, auf das die Magnetscheibe 23 mit ihrem inneren Gewinde 17 angeschraubt wird und verdrehbar lagert, angeordnet.

Die Grundplatte 12 weist dazu mittig einen nach innen gerichteten Zentrierstift 15c auf, der ebenfalls einen Teil der zentralen Achse 15 bildet und durch die Spannrolle 33 bis in die Bohrung 32 der Ankerscheibe 31 faßt.

An dem oberen Aufhängebolzen 15a der zentralen Achse 15, der mit einem Gewinde 15b zum Einschrauben in die Abdeckplatte 11 ausgestattet ist, ist die Magnetscheibe 23 angeschraubt, die von außen über die angeschlossenen elektrischen Kabel 24, 25 magnetisch erregbar ist. Die Abdeckplatte 11 und diese Magnetscheibe 23 sind mittels einer Rückstellfeder 26 derart gekuppelt, daß die Magnetscheibe 23 nach einer Stellverdrehung wieder in ihre Ausgangsstellung zurückgeht.

Ein abgebogenes Ende dieser Rückstellfeder 26 faßt in eine Bohrung 27 der Magnetscheibe 23 und andererseits in die Abdeckplatte 11 ein.

Die Magnetscheibe 23 ist unter der Abdeckplatte 11 frei drehbar aufgehängt und zieht bei Erregung die Ankerscheibe 31 an, welche auf dem Zentrierstift 15c lagert.

Die Rückstellfeder 26 ist vorgespannt und hält die Magnetscheibe 23 bei vakuumfreier Unterdruckverstelleinrichtung 30 in der Ausgangsstellung.

Zur Stellverdrehung dieser Magnetscheibe 23 ist sie mit einem Gelenkarm 28 als Verstellhebel gekuppelt (an festem Gegenlager 29 an der Magnetscheibe 23), der Teil der Unteraruckverstelleinrichtung 30 ist, die teilweise an der Abdeckplatte 11 sich abstützt. Derartige Unterdruckverstelleinrichtungen 30 mit Membrane reagieren auf Unterdruck der Verbrennungsmotoren.

Der Unterdruckversteller 30 ist deshalb über einen Vakuumschlauch 30a am Vakuumsystem des Vergasers oder Einspritzvorrichtung angeschlossen.

Auf der der Abdeckplatte 11 gegenüberliegenden Seite der Magnetscheibe 23 ist eine Ankerscheibe 31 aus magnetischem Material gelagert, die auf der zentralen Achse 15, und zwar um deren Zentrierstift 15c längsverschiebbar gelagert ist, und bei erregter Magnetscheibe 23 sich an giese anlegt und deren Winkelverdrehungen mitmacht. Dazu besitzt diese Ankerscheibe 31 ein zentrales Sackloch 32, in welches das freie (obere) Ende des Zentrierstiftes 15c der zentralen Achse einfaßt. Der Verschiebeweg dieser Ankerscheibe 31 beträgt z.B. 0,3 bis 1 mm, um sich an die Unterseite der Magnetscheibe 23 in deren magnetisiertem (erregten) Zustand anzulegen und bei Entmagnetisierung der Magnetscheibe 23 abzufallen.

Mit dieser Ankerscheibe 31 wirkt die benachbarte Spannrolle 53 zusammen, die sich ebenfalls um den Zentrierstift 15c drehen kann. Mit dieser Spannrolle 53 ist der Bowdenzug 34 gekuppelt, der sich bei der Winkelverdrehung der Spannrolle 33 mehr oder weniger in die Randnut 35 einlegt. Zum Kuppeln zwischen dieser Spannrolle 33 und dem Bowdenzug 34 ist an der Seite der Spannrolle 33 eine Seilplombe 36 angeordnet, die in eine randseitige Bohrung 37 einfaßt und das Ende des Bowdenzuges 34 festhält.

Zwischen der Ankerscheibe 31 und der Spannrolle 33 ist eine Rückzugfeder 38 eingeschaltet, ebenso zwischen der Spannrolle 33 und der benachbarten Grundplatte 12 eine weitere Rückstellfeder 39, die beide die Aufgabe haben, die Spannrolle 33 gegen den Zug des Bowdenzugs 34 zu drehen und damit den Bowaenzug 34 anzuspannen, der mit einer Drosselklappe 40 o.dgl. an dem Vergaser verbunden ist, die unter der Wirkung einer Rückholfeder (nicht dargestellt) steht. Dabei übt die Rückzugfeder 3ö wie die Rückstellfeder 39 eine geringere Kraft aus als die an der Drosselklappe 40 angreifende Rückholfeder.

An der Ankerscheibe 31 stehen Anschläge 41, 50 in Richtung auf die Spannrolle 33 vor, die sich in der Vertiefung 42 der Spannrolle 33 einlegen. Auf dem Anschlag 41 ist die Feder 38 mit ihrer Öse 38a befestigt, während das andere geradlinig verlaufende Ende 38b in den Schlitz 45 des Zentrierstiftes 15c eingreift.

Der Anschlag 50 der Ankerscheibe 31 liegt in Spannrichtung der Spannrolle 33 hinter dem Anschlagstift 49, so daß die Spannrolle 33 in einer Richtung frei bewegbar durch den Bowdenzug 34 des Gaspedales ist. Wird der Bowdenzug 34 entlastet, wird gleichzeitig die Spannrolle 33 mit ihrem Anschlagstift 49 durch die Feder 39 bis vor den Anschlag 50 gebracht. Bei stromlosen Zustand der Magnetscheibe 23 wird auch die Ankerscheibe 31 durch die Feder 38 in Ausgangsstellung gebracht, so daß die beiden Anschläge 49, 50 stets voreinanderliegen. Die Stellung des Anschlages 50 bei erregbarer Magnetscheibe 23 richtet sich dabei stets nach der Unterdruckverstelleinrichtung 30.

Das unterhalb der Grundplatte 12 vorstehende Gewindestück 44 dient zum Befestigen am Fahrzeugrahmen im Motorraum o.dgl.

Das gerade Ende der Rückstellfeder 39b ist in einen entsprechenden Schlitz 51 unterhalb der Spannrolle 33 gehalten. Diese Rückstellfeder 39 ist anderenends mit ihrer Schlaufe 39a an einem Gegenlager 47 in der Grundplatte 12 eingehängt. Die Spannrolle 33 lagert mittels des Zentrierstifts 15c auf der Grundplatte 12 bzw. stützt sich auf der nach oben gerichteten Gleitfläche 12a ab. Bei vorgespannter Rückstellfeder 39 wird jede Bewegung der Drosselklappe 40 (oder eines Gestänges) über den Bowdenzug 34 auf die Spannrolle 33 in beiden Drehrichtungen übertragen. Der Bowdenzug 34 ist endseitig mit einer Seilplombe 36 in der randseitigen Bohrung 37 eingehängt und wird bei jeder Bewegung in der Randnut 35 als Seilführungsnut geführt.

Der Zentrierstift 15c ragt aus der aufgesetzten Spannrolle 33 so weit heraus, daß die Rückholfeder 38 mit ihrem geraden Ende 38b in dieselbe Nut 45 oberhalb der Spannrolle 33 eingeschoben werden kann und die Ankerscheibe 31 mit dem zentralen Sackloch 32 auf dem Zentrierstift 15c lagert, wobei sich die Ankerscheibe 31 auf der Gleitfläche 33a der Spannrolle 33 abstützt. Die Rückstellfeder 39 ist mit ihrer Endschlaufe 39a an dem Anschlag 47 eingehängt und hält die Ankerscheibe 31, während das geradlinige Ende 39b an einem Gegenanschlag (Schlitz) 51 unterhalb der Spannrolle 33 die Rückstellfeder 39 hält. Die Ankerscheibe 31 folgt, bedingt durch die vorgespannte Rückstellfeder 39, jeder Bewegung der Spannrolle 33.

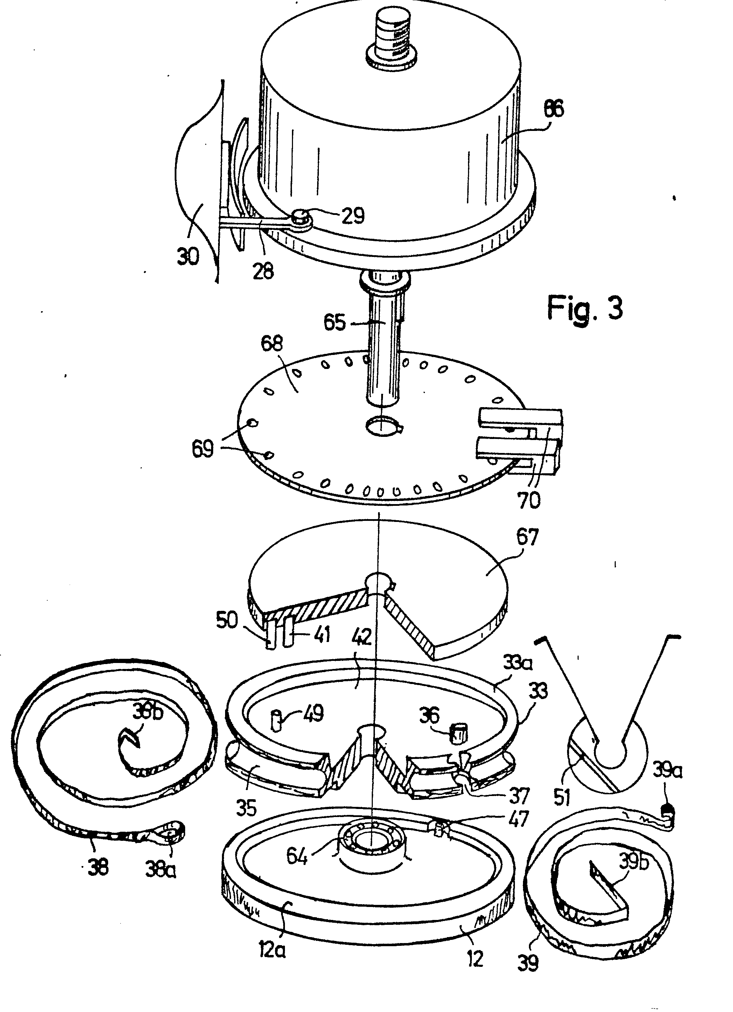

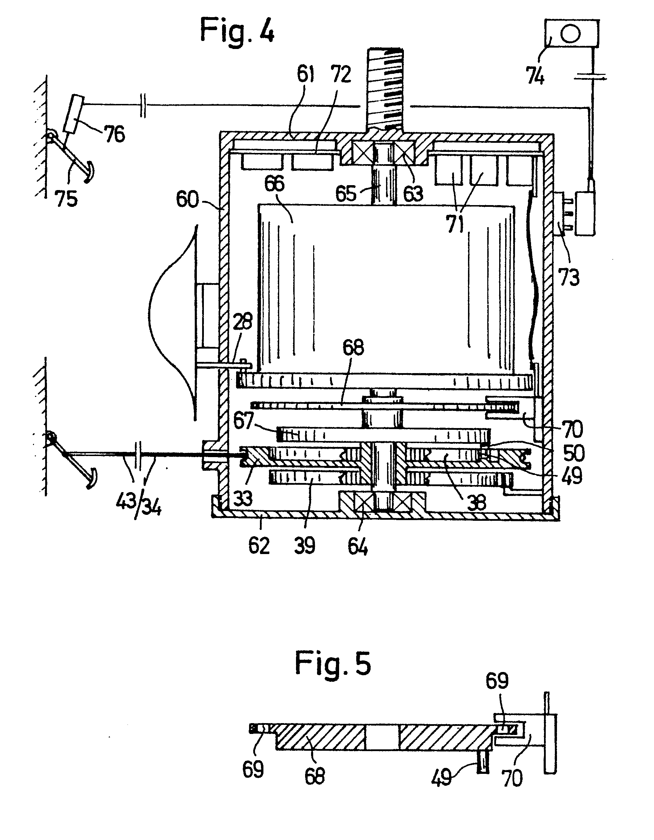

Mit 60 ist in Fig.3 und 4 ein geschlossenes Gehäuse einer Festlegevorrichtung mit Stellmotor 66 bezeichnet, das eine Deckplatte 61 und eine Grundplatte 62 mit jeweils einem innenseitigen zentralen Lager (Kugel- oder Rollenlager) 63 bzw. 64 aufweist, in dem die Enden einer zentralen Welle 65 freidrehend gelagert sina.

Diese zentrale Welle 65 ist Bestandteil eines elektrischen Stellmotors 66 als Schrittschaltmotor für die verschiedenen Einstellungen.

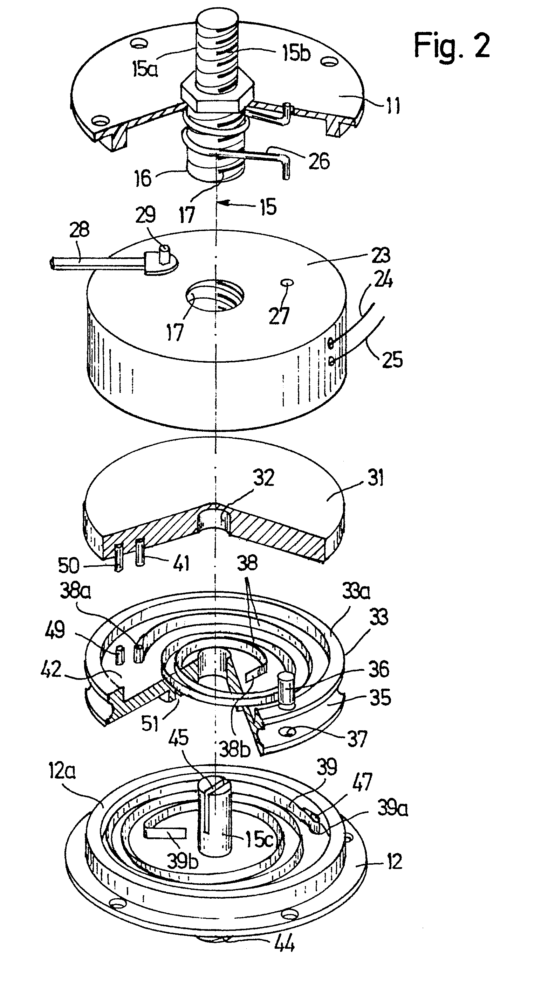

An dem Schrittmotor 66 greift der Gelenkarm 28 der Unterdruckverstelleinrichtung 30 an, wodurch der Schrittmotor 66 ebenso dem Unterdruck wie die Magnetscheibe 23 unterliegt und verdreht werden kann, wie auch eine Mitnehmerscheibe 67 an der die Anschläge 41, 50 (vergl.Fig.2 und 3 mit entsprechender Beschreibung) befestigt sind.

An der zentralen Welle 65 ist eine Lochscheibe 6ö befestigt, die mittels einer Keilverbindung mit der Motorwelle 65 sich verdreht, deren Kodierlöcher 69 von einer oder mehreren Fotozellen 70 abgetastet werden. Diese am Gehäuse 60 oder am Stellmotor 66 angeordneten Fotozellen 70 sind mit einer elektronischen Steuereinrichtung 71 elektrisch verbunden, die z.B. auf einer im Gehäuse 60 befestigten Trägerscheibe 72 angeordnet ist.

Es können auch die vom Stellmotor 66, dessen Stator permanent magnetisch erregt ist, erzeugten Rückgabeimpulse elektronisch ausgewertet und zum Stellen des Motors verwendet werden.

Diese Steuereinrichtung 71 ist elektrisch über einen Stecker 73 mit einer Ein- und Ausgabesteuereinrichtung 74 (zwischen Batterie und Zündspule) sowie mit einem weiteren Schalter 76 am Kupplungspedal 75 verbunden.

über die Fotozellen 70 wird die jeweilige Stellung der Lochscheibe 68 abgetastet (abgelesen). Diese Stellung wird elektronisch gespeichert und ist jederzeit abrufbar, wobei jede Handbetätigung sich erübrigt.

Während des Schaltvorganges (Betätigung des Kupplungspedals 75) setzt die Steuerung den Stellmotor 66 (als Schrittmotor) in eine Nullstellung. Beim Loslassen des Kupplungspedals 75 wird die vorher gespeicherte Stellung der Lochscheibe 68 und damit die Drosselklappenstellung wieder hergestellt.

Mit der Lochscheibe 68 ist die Mitnehmerscheibe 6'( starr gekuppelt, von der ein daran befestigter Anschlag 50 vorsteht, der mit einem Gegenanschlag 49 an einer benachbarten Spannrolle 33 zusammenwirkt.

Die Ausbildung und die Arbeitsweise dieser Spannrolle 33, ihre Kupplung mit dem Bowdenzug 34 ist bereits zu der Ausführung der Fig.2 vorhergehend beschrieben und mit dieser übereinstimmend.

Bei der in Fig.5 dargestellten abgeänderten Ausführungsform sind die Lochscheibe 68 und die Mitnehmerscheibe 67 derart zusammengefaßt, daß die Mitnehmer 41, 50 unmittelbar unter der Lochscheibe 68 befestigt sind und mit der Spannrolle 33 zusammenwirken.

## Patentansprüche

1. Vorrichtung zum Festlegen einer Einstellvorrichtung mit einem mittels eines Gaspedales betätigten Bowdenzug, Gestänge, der mit einem Vergaser und/oder einer Einspritzeinrichtung an Brennkraftmaschinen, insbesondere Kraftfahrzeugmaschinen, verbindbar ist, gekennzeichnet durch eine elektrisch (elektronisch) gesteuerte Dreheinrichtung als Festlegeinrichtung, die mit einer mit dem Hebelarm (48) des Vergasers (der Einspritzeinrichtung) unter Zwischenschaltung eines weiteren Bowdenzuges (34) kuppelbare, unter Federwirkung sich rückdrehende Spannrolle (33) kraftschlüssig verbunden ist.

2. Vorrichtung nach Anspruch 1, dadurch gekennzeichnet, daß als Dreheinrichtung eine Magnetscheiben-Feststellvorrichtung vorgesehen ist, deren um eine Zentralachse (15) drehbar gelagerte, gesondert elektrisch erregbare Magnetscheibe (23) mechanisch winkelverstellbar ist und die eine benachbarte, um dieselbe Zentralachse (15) drehbar gelagerte und auf dieser verschiebbare Ankerscheibe (31) zeitweise magnetisch hält, die mit dem weiteren Bowdenzug (34) gekuppelt ist.

3. Festlegevorrichtung nach Anspruch 1 und 2, dadurch gekennzeichnet, daß die Magnetscheibe (23) als eine zeitweise magnetisierbare Metallscheibe ausgebildet ist.

4. Festlegevorrichtung nach den Ansprüchen 1 bis 3, dadurch gekennzeichnet, daß die Ankerscheibe (31) und die scheibenförmige Spannrolle (33) mittels Anschlägen (49, 50) gegeneinander festlegbar ausgebildet sind.

5. Vorrichtung nach Anspruch 1, gekennzeichnet durch einen Stellmotor (66) als Feststelleinrichtung, mit dessen Stellmotorwelle (65) eine Kodierscheibe wie Lochscheibe (68) und eine Mitnehmerscheibe (69) gekuppelt ist, deren Stellung mittels einer Abtast-(Ablese-)einrichtung wie Fotozelle ablesbar und mittels einer Steuereinrichtung über den Stellmotor (66) einstellbar (festlegbar) ist und die eine mit dem Gaspedal kuppelbare, unter Federwirkung stehende Spannrolle (33) bewegt.

6. Festlegevorrichtung nach den Ansprüchen 1 bis 5, dadurch gekennzeichnet, daß die Ankerscheibe (31)/ Mitnehmerscheibe (68) mit gegen die Spannrolle (33) vorstehendem Anschlag (50) ausgestattet ist, der sich lose hinter dem Anschlag (49) der Spannrolle (33) anlegt und diese in einer Drehrichtung arretiert.

7. Festlegevorrichtung nach den Ansprüchen 1 bis 6, dadurch gekennzeichnet, daß die Spannrolle (33) mittels einer Rückstellfeder (39) verstellbar ist.

8. Festlegevorrichtung nach den Ansprüchen 1 bis 7, dadurch gekennzeichnet, daß die Rückstellfeder (39) der Spannrolle (33) eine geringere Kraft ausübt als die an der Drosselklappe (40) o.dgl. angreifende Rückholfeder auf die Drosselklappe o.dgl.

9. Festlegevorrichtung nach den Ansprüchen 1 bis 8, dadurch gekennzeichnet, daß die Mantelfläche der Spannrolle (33) eine Nut (35) zur Aufnahme des Bowdenzuges (34) aufweist.

10. Festlegevorrichtung nach den Ansprüchen 1 bis 5, dadurch gekennzeichnet, daß die Kodierscheibe (68) und die Mitnehmerscheibe (31) als eine Scheibe ausgebildet sind.
